# EUROPEAN PATENT SPECIFICATION

(11) **EP 1 213 957 B1**
(45) Date of publication and mention of the grant of the patent: **08.06.2005**
(21) Application number: 00961283.9
(22) Date of filing: 25.08.2000
(51) Int. Cl.: A01K 7/06

(54) **VALVE DEVICE**
VENTILVORRICHTUNG
DISPOSITIF DE SOUPAPE

(30) Priority: 07.09.1999 SE 9903152
(43) Date of publication of application: 19.06.2002
(73) Proprietor: FIG Metall AB, 33591 Gnosjö (SE)
(72) Inventor: MELIN, Christer, S-335 91 Gnosjö (SE)
(74) Representative: Wallengren, Yngvar
(86) International application number: PCT/SE2000/001636
(87) International publication number: WO 2001/017341

(56) References cited:
- EP-A1- 0 486 373
- DE-A1- 3 025 366
- US-A- 4 561 633

## Description

The present invention relates to a device in a drinking fountain, or waterer, for cattle and comprising a valve head with connection to a water conduit and an openable shut-off valve, the valve head having an outlet aperture which discharges interiorly in a diffuser which is moreover connected to the shut-off valve for its operation, the diffuser having, at its end facing towards the valve head, an inlet for the suction intake of air in the water.

### BACKGROUND ART

There are currently on the market a few well-known variations of drinking fountains or waterers for cattle. Common to these fountains is that the animals actuate some form of operating device in or at a water cup. For example, the operating device may be in the form of a tongue in the bottom of the water cup or in the form of a cylinder which further functions as a diffuser. The fountain or waterer is connected to a water conduit which may be both vertical and horizontal, and the fountain is possibly directed down into the water cup with the aid of an angled connecting piece.

Regardless of the appearance of the fountain and how its connecting pieces are angled, the flow through them is of the order of magnitude of 20 l/min., which substantially corresponds to the drinking capacity of the average cow. Such a flow gives a powerful water jet and, in order to prevent the jet from splashing against the inside of the water cup so that its surroundings become soaked, a gentler water jet is realised in that air is released into the fountain and mixed with the water. As a result, this avoids the risk that cattle feed and hay close by become wet and the immediate environment of the animals is improved as regards physical comfort. The fountains which have a substantially cylindrical operating portion/diffuser have their air inlet at the upper edge of the cylinder.

There are of course other types of valves, where the pressure of the water is low, and where no air inlets are needed at all. An example of such a valve is shown in US-A-4 561 633.

The above arrangement functions well in theory, but in practical use has proved to be problematical. The problems occur when the cattle are fed with silage, or other feed of corresponding consistency and adhesion. The silage adheres to the muzzle of the cow and when it drinks the silage is transferred to the fountain and sticks in the air inlet. The air admixture is reduced or finally stopped altogether and the water flow may also be shut off. In the worst case scenario, an increased bacterial growth will occur in the fountain with consequential deterioration in taste. A deterioration in the taste of the water may possibly deter the cow from drinking normally, which implies that milk production falls off.

In order to obviate the problem inherent in blocked fountains, it has hitherto been necessary to employ manual cleaning, in which event the fountain is dismantled for cleaning. This is both time and cost-consuming, which is a drawback in modem, rational farming.

### PROBLEM STRUCTURE

The object forming the basis of the present invention is thus to protect the air inlet against dirt and contaminants, in particular in the form of cattle feed residues.

### SOLUTION

The object forming the basis of the present invention will be attained if the drinking fountain intimated by way of introduction is given the characterising feature that the inlet is protected against dirt and contaminations being sucked in with the air by the valve head, having in its end surface facing towards the diffuser, a circumferential groove and by the diffuser extending with some clearance into this groove.

### BRIEF DESCRIPTION OF THE ACCOMPANYING DRAWINGS

The present invention will now be described in greater detail hereinbelow, with particular reference to the accompanying Drawings, in which:
- Fig. 1: is as straight side elevation, partly cut away, of a fountain according to the present invention in the closed state; and
- Fig. 2: is a view corresponding to that of Fig. 1 of the fountain in the opened state.

### DESCRIPTION OF PREFERRED EMBODIMENT

In the following specification, use will be made of expressions such as upwards, downwards and to the side. These expressions agree with corresponding directions in the Figures, which in turn show the fountain in its normal orientation.

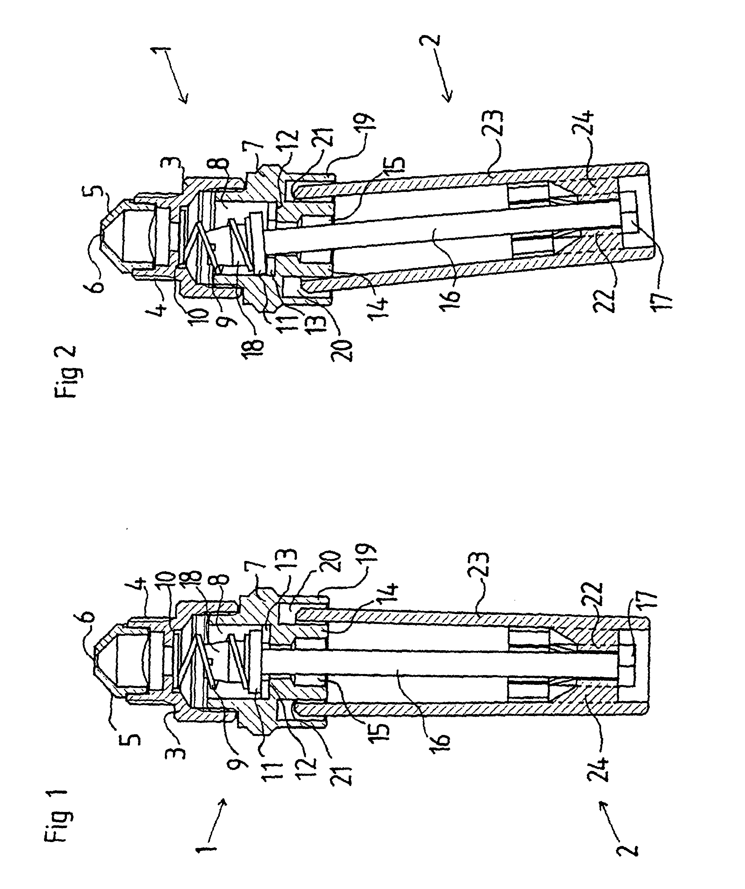

Fig. 1 shows a drinking fountain, or waterer, according to the present invention. The invention has two main components: a valve head 1 and a diffuser 2. The valve head 1 has a connecting piece 3 for connection to a water conduit. For simple connection, the connecting piece 3 is provided with threads 4 in its upper portion. In the upper portion, a throttle 5 is also provided for restricting the flow of water.

The aperture 6 of the throttle may be of different sizes, depending upon the desired flow and the pressure prevailing in the water conduit.

A valve housing 7 is provided in the lower end of the connecting piece, preferably connected by means of threads. In a cavity 8 within the connecting piece 3 and the valve housing 7, there is disposed a compression spring 9. The upper end of the compression spring 9 abuts against an abutment 10 for the spring in the upper end of the cavity 8 in the connecting piece 3. The lower end of the compression spring 9 abuts against a valve disc 11 which in turn abuts against a seat 12 with a washer 13 in the lower region of the cavity 8 in the valve housing 7.

The lower end of the valve housing 7 has a nipple 14 which extends into the diffuser 2 and surrounds an outlet 15.

An operating rod 16 extends from the valve disc 11 and down through the diffuser 2. The operating rod 16 is largely designed as a bolt with a head 17 in the lower end of the diffuser 2, and threads which mesh in a hole through the central region of the valve disc 11. The operating rod 16 extends through the valve disc 11 and into an interiorly threaded sleeve 18 which is preferably of one piece manufacture with the valve disc 11. The sleeve 18 extends upwards within the compression spring 9 for guiding thereof.

The operating rod 16 is disposed within the diffuser with a rather tight fit in a bushing 22 which is disposed in the lower region of the diffuser 2 and which is connected to the peripheral wall 23 of the diffuser via a number of radial bridges so that a number of through flows 24 are formed in the circumferential direction between the bridges and radially outside the bushing 22. This implies that the operating rod 16 is not movable in the radial direction in relation to the diffuser to any appreciable degree, but that water can nevertheless pass in the longitudinal direction of the diffuser out from its interior, through the through flows 24 and out to the region at the bolt head 17.

In the preferred embodiment, the diffuser 2 proper is elongate and tubular. Preferably, it is manufactured from plastic, but metal is also conceivable. Upwardly in the upper end of the diffuser 2, there is disposed an inlet for the water jet which departs from the outlet 15 in a downward direction. Air is also sucked into the diffuser 2 through the inlet. In the lower end of the diffuser 2, there is an outlet for the outflowing water. Within the diffuser 2, there are, as was mentioned above, provided a number of radial bridges which form the through flows 24 between them. Seen in the axial direction from the lower end of the diffuser 2, the bridges form, together with the bushing 22, a spoke-like pattern. In the axial direction, the total surface area of the bridges is rather slight in relation to the total cross sectional area of the diffuser 2. As a result, the bridges are not intended to arrest or reduce the water flow, but merely to "break up" a concentrated jet.

Reverting to the underside of the valve housing 7, there is also visible in Fig. 1 a circumferential wall 19 which, in the axial direction, substantially extends along the nipple 14 at a radial distance therefrom. Between them, the nipple 14 and the circumferential wall 19 define an annular groove or a gap 20 in which the upper end of the diffuser 2 may be disposed with quite generous clearance. Air passes through this gap 20 on use of the fountain and is sucked down into the diffuser through an air inlet 21.

Fig. 2 shows the drinking fountain or waterer in the open state, i.e. during use. In principle, the operation and use of the drinking fountain proceed as follows. When the animal lowers its muzzle into the water cup to drink. It will knock against the diffuser 2. In due course, this will become an acquired behavioural pattern. When the diffuser 2 is moved to the side, the operating rod 16 disposed therein will also be entrained. In principle, the operating rod 16 retains its position within the diffuser 2, since it is disposed without play in relation thereto. The operating rod 16 will then lift the one side of the valve disc 11, while the other side is urged against the washer 13. At that side where the valve disc 11 is raised, the water will flow through. The water flows past the seat 12, the nipple 14, through the outlet 15 and through the diffuser 2. In order, as described above, to obtain a gentler water jet, air is mixed in the water.

The air admixture functions as follows: When water flows at high speed, a static partial vacuum is obtained since the total pressure, the sum total of the static and dynamic pressures, is constant. If the water flows through a pipe with one or more apertures in addition to the outlet, the partial vacuum entails that the ambient air is sucked into the tube through the apertures. This principle is utilised in simple vacuum pumps which are connected to a water tap. In the present invention, the intention is, however, not to evacuate a space of air, but the ambient air may be considered as a reservoir where the pressure is substantially constant during the time when the drinking fountain is being used.

With the aid of the flowing water, the air is sucked into the gap 20, i.e. past the circumferential wall 19 and the nipple 14 down into the diffuser 2 and is mixed with the water.

Since the drinking fountain is provided with the groove 20 defined by the circumferential wall 19 and the nipple 14, the risk is reduced that silage or other animal feed enters into the air inlet 21, and the problems described by way of introduction have been obviated. Any possible animal feed residues fasten primarily on the outside of the circumferential wall 19 and the diffuser and can rapidly and simply be wiped off.

If the drinking fountain must, for some reason or another, nevertheless need to be dismantled, this operation is facilitated in that the valve housing 7 immediately above the circumferential wall 19 is provided with engagement means for, for example, a wrench.

### DESCRIPTION OF ALTERNATIVE EMBODIMENTS

One alternative method of realising the groove or the gap 20 is to mount, on the valve housing 7, a loose outer ring or sleeve which extends over the air inlet 21 in the axial direction and around the drinking fountain in the circumferential direction. The outer sleeve has an upper portion which terminates tightly against the valve housing 7 while being open downwards and permitting the passage of air into the air inlet 21. The space in the radial direction between the outer sleeve and the nipple 14 constitutes the groove or gap 20 in which the upper end of the diffuser 2 is disposed. Thus, the outer sleeve proper forms the circumferential wall 19.

The outer sleeve may be manufactured from a different material than the valve housing 7, e.g. shrinkable plastic film, other plastics, or some suitable metal. Naturally, the sleeve may be manufactured from the same material as the valve housing even though they are not of one piece manufacture with one another.

The present invention may be modified without departing from the scope of the appended Claims.

## Claims

1. A device in a drinking fountain, or waterer, for cattle, comprising a valve head (1) with connection (3) to a water conduit and an openable shut-off valve, the valve head (1) having an outlet aperture (15) which discharges interiorly in a diffuser (2) which is moreover connected to the shut-off valve for its operation, the diffuser (2) having, at its end facing towards the valve head (1), an inlet (21) for the suction intake of air in the water, **characterised in that** the inlet is protected against dirt and contaminations being sucked in with the air by the valve head (1), having in its end facing towards the diffuser (2), a circumferential groove (20); and by the diffuser (2) extending into this groove (20) with a certain clearance.

2. The device as claimed in Claim 1, **characterised in that** a circumferential wall (19) surrounds the groove (20) and is substantially formed as a casing surface on a cylinder.

3. The device as claimed in any of Claims 1 or 2, **characterised in that** the groove (20) is open downwards between the circumferential wall (19) and the diffuser (2).

4. The device as claimed in any of Claims 1 to 3, **characterised in that** the outlet (15) for the water jet discharges in the axial direction below the air inlet (21)

## Patentansprüche

1. Vorrichtung in einem Trinkbrunnen oder in einem Tränkebecken für Vieh mit einem Ventilkopf (1) mit Anschluss (3) an eine Wasserleitung und einem öffnungsfähigen bzw, beweglichen Absperrventil, wobei der Ventilkopf (1) eine Auslassöffnung (15) besitzt, die im Innern in einen Diffusor (2) abgeführt wird, der für seine Funktionsweise außerdem mit dem Absperrventil verbunden ist, wobei der Diffusor (2) an seinem Ende in Richtung des Ventilkopfes (1) einen Einlass (21) für die Ansaugung von Luft im Wasser besitzt, **dadurch gekennzeichnet, dass** der Einlass davor geschützt ist, dass mit der Luft Verschmutzungen durch den Ventilkopf (1) angesaugt werden, wobei er an seinem Ende in Richtung Diffusor (2) eine umlaufende Nut (20) besitzt und der Diffusor (2) in einem bestimmten Abstand in diese Nut (20) hinein verläuft.

2. Vorrichtung nach Anspruch 1, **dadurch gekennzeichnet, dass** eine umlaufende Wand (19) die Nut (20) umgibt, die im wesentlichen als Verschalungsfläche auf einem Zylinder gebildet wird.

3. Vorrichtung nach Anspruch 1 oder 2, **dadurch gekennzeichnet, dass** die Nut (20) zwischen der umlaufenden Wand (19) und dem Diffusor (2) nach unten offen ist.

4. Vorrichtung nach einem der vorhergehenden Ansprüche 1 bis 3, **dadurch gekennzeichnet, dass** der Austritt (15) für den Wasserstrahl in axialer Richtung unterhalb des Lufteinlasses (21) abgeführt wird.

## Revendications

1. Dispositif dans une fontaine à eau, ou abreuvoir, pour le bétail, comprenant une tête de soupape (1) avec une connexion (3) vers une conduite d'eau et une soupape d'arrêt ouvrable, la tête de soupape (1) ayant une ouverture de sortie (15) qui s'écoule intérieurement dans un diffuseur (2) qui est, de plus, connecté à la soupape d'arrêt pour son fonctionnement, le diffuseur (2) ayant, à son extrémité tournée vers la tête de soupape (1), une entrée (21) pour l'admission d'aspiration de l'air dans l'eau, **caractérisé en ce que** l'entrée est protégée contre la saleté et les contaminations étant aspirées avec l'air par la tête de soupape (1), ayant à son extrémité orientée vers le diffuseur (2), une rainure circonférentielle (20) ; et **en ce que** le diffuseur (2) s'étend dans cette rainure (20) avec un certain jeu.

2. Dispositif selon la revendication 1, **caractérisé en ce qu'**une paroi circonférentielle (19) entoure la rainure (20) et est essentiellement formée comme une surface enveloppante sur un cylindre.

3. Dispositif selon l'une quelconque des revendications 1 ou 2, **caractérisé en ce que** la rainure (20) est ouverte vers le bas entre la paroi circonférentielle (19) et le diffuseur (2).

4. Dispositif selon l'une quelconque des revendications 1 à 3, **caractérisé en ce que** la sortie (15) pour le jet d'eau s'écoule dans la direction axiale en dessous de l'entrée d'air (21).
